# FASCICULE DE BREVET EUROPEEN

(11) **EP 0 946 264 B1**
(45) Date de publication et mention de la délivrance du brevet: **25.04.2001**
(21) Numéro de dépôt: 97943012.1
(22) Date de dépôt: 26.09.1997
(51) Int. Cl.: B01D 53/86, B01J 29/22, B01J 29/24

(54) **CATALYSEUR, EN PARTICULIER DE REDUCTION DES NOx, ET PROCEDE DE REDUCTION DES NOx**
KATALYSATOR, INSBESONDERE ZUR NOx-REDUKTION UND METHODE ZUR NOx-REDUKTION
CATALYST, IN PARTICULAR FOR REDUCING NOx, AND METHOD FOR REDUCING NOx

(30) Priorité: 10.10.1996 FR 9612386
(43) Date de publication de la demande: 06.10.1999
(73) Titulaire: GAZ DE FRANCE, 75017 Paris (FR)
(72) Inventeur: HAMON, Christian, F-44600 Saint-Nazaire (FR); LE LAMER, Olivier, F-56100 Lorient (FR); MORIO, Nadège, F-56100 Lorient (FR); SAINT-JUST, Jacques, F-78230 Le Pecq (FR)
(74) Mandataire: Berger, Helmut
(86) Numéro de dépôt international: FR9701704
(87) Numéro de publication internationale: WO9815339

(56) Documents cités:
- EP-A- 0 325 511
- EP-A- 0 499 286
- EP-A- 0 625 369
- JP-A- 5 115 751
- JP-A- 5 208 138
- US-A- 5 149 512
- DATABASE WPI Section Ch, Week 9324 Derwent Publications Ltd., London, GB; Class H06, AN 93-190847 XP002033242 & JP 05 115 751 A (TOKYO GAS CO LTD) , 14 mai 1993
- DATABASE WPI Section Ch, Week 9338 Derwent Publications Ltd., London, GB; Class H06, AN 93-297524 XP002033243 & JP 05 208 138 A (TOSOH CORP) , 20 août 1993

## Description

L'invention concerne un catalyseur de réduction des NOₓ, ainsi qu'un procédé de réduction des NOₓ.

On connaît de nombreux procédés de transformation des NOₓ en azote.

Par exemple, le brevet US-A-5 149 512 décrit un procédé de réduction des NOₓ par du méthane, en présence d'oxygène, dans lequel un catalyseur constitué d'une zéolithe en particulier de structure mordénite avec une taille de pores comprise entre 5 et 15 Å, échangée avec du cobalt, est utilisé.

Cependant, le taux de conversion des NOₓ en azote est très faible, c'est-à-dire voisin de 27 % à 450°C. De plus, ce catalyseur est échangé avec des teneurs élevées de cobalt, plus précisément avec 5,5 % en poids de cobalt par rapport au poids total du catalyseur.

Par ailleurs, la demande de brevet européen N° EP-A-0 286 507 décrit l'utilisation d'une zéolithe de structure mordénite sous forme ammonium ou acide dite à "larges pores", c'est-à-dire avec une taille de pores supérieure à 6,6 Å, pour la réduction des NOₓ en présence d'oxygène. Ce document décrit également l'utilisation d'une zéolithe de structure mordénite dite à "petits pores" c'est-à-dire avec une taille de pores inférieure à 4,4 Å, échangée avec du cuivre pour la réduction des NOₓ en présence d'oxygène. Cependant, dans le dernier cas, l'ammoniac est utilisé en tant qu'agent réducteur des NOₓ. Or l'utilisation et le stockage de l'ammoniac sont très délicats. De plus, il n'est fait aucune mention dans ce document de l'activité de ces catalyseurs en termes de pourcentage de conversion des NOₓ.

Le document EP-A-325 511 décrit la réduction catalytique des NOₓ par l'ammoniac et non par le méthane, ces deux techniques de réduction n'étant pas comparables du point de vue des catalyseurs à utiliser. Comme catalyseurs sont utilisés des mordénites à petits pores échangées avec du Co.

Le document EP-A-0 625 369 décrit des catalyseurs destinés à d'autres fins encore, à savoir la décomposition du N₂O. Les catalyseurs utilisés peuvent être des mordénites à petit pores échangées avec - de préférence - du Co ou du Fe.

Le document EP-A-0 499 286 décrit un procédé de réduction des NOₓ par le méthane en utilisant une zéolithe à larges pores échangée avec des quantités largement définies de cobalt et/ou de palladium.

Le document JP-A-05-115751 ainsi que le document JP-A-05-208138 décrivent également des catalyseurs de réduction des NOₓ par le méthane composés d'une zéolithe à larges pores comprenant du cobalt et/ou du palladium.

L'invention vise à pallier les inconvénients liés à l'utilisation de l'ammoniac et dans le même temps à obtenir de meilleurs taux de conversion des NOₓ.

A cet effet, l'invention propose un catalyseur de réduction des NOₓ par du méthane ou tout mélange comprenant majoritairement du méthane, caractérisé en ce qu'il est constitué d'une zéolithe de structure mordénite "à petits pores" échangée avec du Pd optionnellement en combinaison avec du Co, tel que défini dans la revendication 1.

Selon un premier mode de réalisation du catalyseur de l'invention, la zéolithe est échangée avec du Pd, seulement, à une teneur en cations Pd²⁺ comprise entre 0,4 % et 0,6 % en poids par rapport au poids total du catalyseur.

Selon un mode de réalisation particulièrement préféré du catalyseur de l'invention, la zéolithe est échangée avec entre 0,4 % et 0,6 % en poids de Pd sous la forme Pd²⁺ et avec entre 1,18 % et 3,2 % en poids de cations Co²⁺, par rapport au poids total du catalyseur.

Selon une caractéristique des catalyseurs selon l'invention, la zéolithe est sous forme sodique ou sous forme ammonium avec un rapport Si/Al égal à 5,5.

L'invention propose également un procédé de réduction des NOₓ par du méthane ou tout mélange contenant majoritairement du méthane caractérisé en ce qu'il comprend la mise en contact d'un milieu réactionnel comprenant des NOₓ et du méthane avec le catalyseur selon l'invention.

Le procédé de réduction des NOₓ selon l'invention est de plus caractérisé en ce que le milieu réactionnel contient en plus de l'oxygène.

Dans le procédé de l'invention, le milieu réactionnel, peut de plus contenir des composés soufrés.

D'autres détails, caractéristiques et avantages de l'invention apparaîtront plus clairement au cours de la description détaillée qui suit et qui est faite en référence aux figures annexées dans lesquelles :

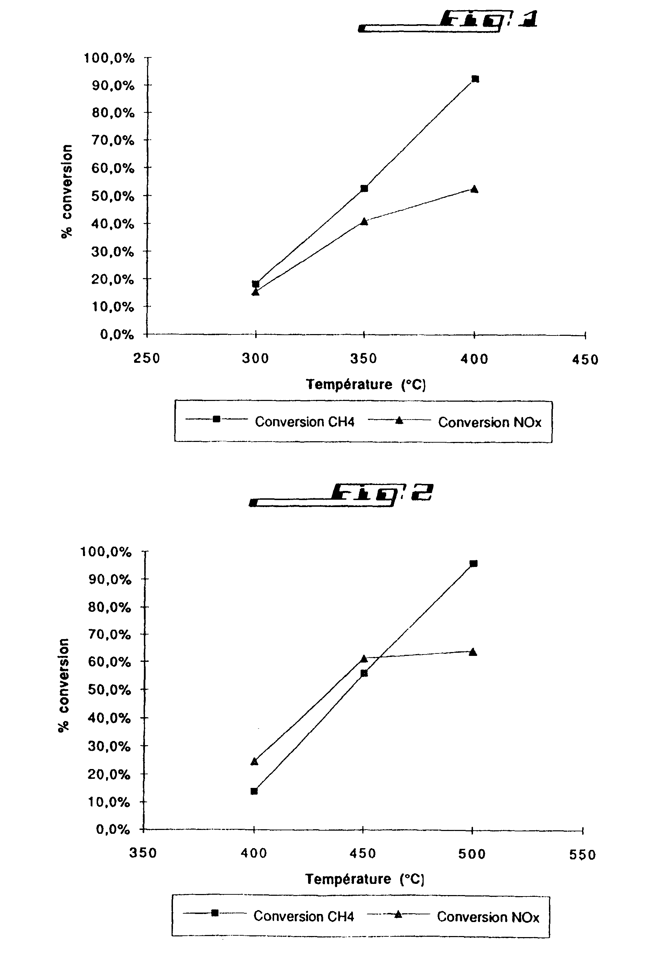

La figure 1 illustre les pourcentages de conversion des NO_{X} et de CH₄ obtenus avec un catalyseur selon l'invention constitué d'une zéolithe de structure mordénite à "petits pores" échangée avec 0,5 % en poids de Pd par rapport au poids total du catalyseur, en présence de 10 % d'oxygène, en fonction de la température de réduction.

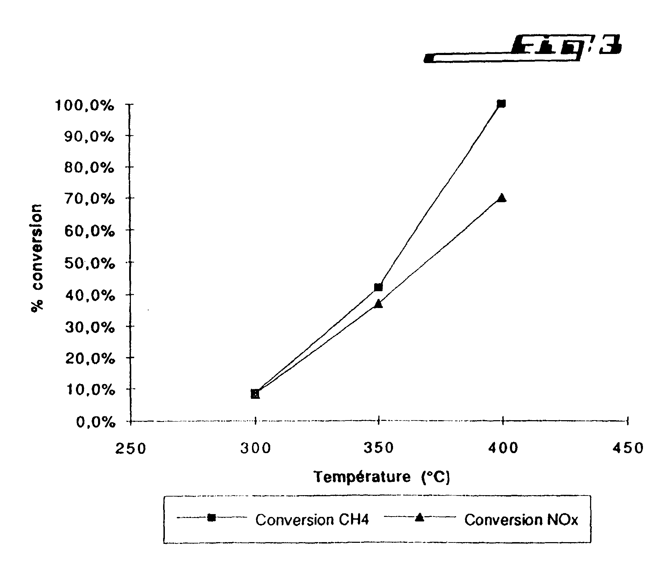

La figure 2 illustre les pourcentages de conversion des NOₓ et de CH₄ en utilisant un catalyseur non conforme avec l'invention constitué d'une zéolithe de type mordénite à "petits pores" échangée avec 1,9 % en poids de Co par rapport au poids total du catalyseur en présence de 10 % d'oxygène, en fonction de la température de réduction.

La figure 3 illustre les pourcentages de conversion des NOₓ et de CH₄ en utilisant un catalyseur selon l'invention constitué d'une zéolithe de structure mordénite à "petits pores" échangée avec 1,9 % en poids Co et 0,6 % en poids de Pd, en présence de 10 % d'oxygène, en fonction de la température de réduction.

Le catalyseur de réduction sélective des NOₓ, selon l'invention est une zéolithe de structure de mordénite de la variété dite "à petits pores" c'est-à-dire que cette zéolithe n'adsorbe pas les molécules de benzène qui ont un diamètre cinétique de 6, 6 Å environ. Pour cette raison, dans ce qui suit et dans ce qui précède, une zéolithe à structure mordénite sera dite à "petits pores" lorsque le diamètre de ces pores sera inférieur à 5 Å et sera dite à "larges pores" lorsque le diamètre de ces pores sera supérieur à 5 Å.

De préférence , la zéolithe de structure mordénite a un rapport molaire Si/Al de 5,5. C'est une mordénite en poudre sous forme sodique (NaM) ou de préférence sous forme ammonium (NH₄M) . Les catalyseurs de l'invention sont préparés par échange à partir d'une solution de sels de cobalt, de palladium ou de palladium/cobalt, d'une manière connue en soi.

Les sels utilisés pour les échanges en solution aqueuse sont de préférence le palladium tétramine et l'acétate de cobalt.

Les zéolithes sont ensuite de préférence mises en forme sous forme de granulés par pastillage avec environ 10 % en poids par rapport au poids total du catalyseur d'un liant à base de silice, puis granulation et tamisage à 0,5 - 1 mm.

Les catalyseurs sont ensuite de préférence activés sous air à 500°C pendant deux heures puis évalués en réduction catalytique par le méthane dans un réacteur tubulaire en inox entouré de coquilles chauffantes. La température est contrôlée par des régulateurs et la concentration des différents gaz à l'entrée du réacteur est assurée par des débitmètres massiques. Les concentrations en NO et NO₂, dans les mélanges gazeux, ont été mesurées par chimiluminescence, et les concentrations en N₂O par infrarouge.

Comme on l'a déjà dit ici, une zéolithe de structure mordénite à "petits pores" a déjà été utilisée pour la réduction des oxydes d'azote en présence d'oxygène. Cependant, cette réduction est effectuée en utilisant de l'ammoniac en tant que réducteur et la zéolithe était échangée avec du cuivre.

Cependant, aucun résultat quant à l'activité d'un tel catalyseur n'était donné en termes de pourcentage de conversion des NOₓ.

### Exemple comparatif 1

On a alors préparé deux catalyseurs, l'un étant constitué d'une zéolithe de structure mordénite à "petits pores" échangée avec 2,5 % en poids de Cu et l'autre étant constitué d'une zéolithe de structure mordénite à "larges pores" échangée avec 2,25 % de Cu, comme décrit ci-dessus. Ces deux catalyseurs ont été testés quant à leurs activités de conversion des NO_{X} en azote en utilisant comme réducteur de l'ammoniac en présence de 5 % d'oxygène.

Les conditions expérimentales étaient les suivantes :

| | |
|---|---|
| Conditions du test | NO : 500 ppm |
| | NH₃ : 550 ppm |
| | O₂ : 5 % en volume par rapport au volume total gazeux |
| | VVH : 20 000 h⁻¹ |
| | VVH = vitesse spatiale horaire |

Les résultats sont regroupés au Tableau 1 suivant.

**Tableau 1**

| Catalyseur | T°C | Conversion NOₓ % |
|---|---|---|
| Mordénite à "larges pores" échangée avec Cu | 150 | 60,5 |
| | 200 | 99,6 |
| | 250 | 100 |
| Mordénite à "petits pores" échangée avec Cu | 200 | 72,6 |
| | 250 | 94 |
| | 300 | 91 |

On voit d'après les résultats reportés au Tableau 1 que le catalyseur constitué d'une mordénite à "larges pores" échangée au cuivre a une activité supérieure au catalyseur constitué d'une mordénite à "petits pores" avec le même taux d'échange de cuivre, pour la réduction sélective des oxydes d'azote par l'ammoniac.

Cependant, malgré les enseignements de l'art antérieur et les résultats obtenus ci-dessus en utilisant un catalyseur constitué d'une mordénite à "petits pores", on a découvert que, de façon surprenante, un catalyseur selon l'invention constitué d'une zéolithe de structure mordénite à "petits pores" échangée avec du Pd ou bien avec du Pd et du Co permettait d'obtenir des pourcentages de conversion de NO_{X} en N₂ très supérieurs à ceux obtenus en utilisant un même catalyseur, mais constitué d'une zéolithe à "larges pores", même en présence d'eau, d'oxygène et même de composés soufrés tels que SO₂ comme cela sera discuté ci-après.

Pour mieux faire comprendre l'objet et les avantages de l'invention, on va en décrire maintenant à titre d'exemples purement illustratifs et non limitatifs plusieurs modes de mise en oeuvre.

### Exemple 1 :

### Activité de réduction des NOₓ d'un catalyseur selon l'invention contenant 0,5 % en poids de Pd

On a préparé, comme décrit antérieurement, un catalyseur constitué d'une zéolithe de structure mordénite à "petits pores" échangée avec 0,5 % en poids de Pd par rapport au poids total du catalyseur. La mordénite de base était une mordénite sous sa forme ammonium. Ce catalyseur a été ensuite testé dans les conditions suivantes :

| | |
|---|---|
| Conditions du test | NO : 200 ppm |
| | CH₄ : 300 ppm |
| | O₂ : 10 % en volume par rapport au volume total gazeux |
| | VVH : 10000 h-1 |
| | VVH = vitesse spatiale horaire |

Les résultats en pourcentage de conversion des NO_{X} et de CH₄ en fonction de la température de réduction sont reportés au Tableau 2 suivant :

**Tableau 2**

| Température (°C) | Conversion (%) | |
|---|---|---|
| | CH₄ | NOₓ |
| 300 | 18,2 % | 15,4 % |
| 350 | 52,7 % | 41,0 % |
| 400 | 92,7 % | 53,0 % |

Ces résultats sont également illustrés sous forme graphique dans la figure 1 annexée.

A partir du Tableau 2 ci-dessus et de la figure 1 annexée, on peut voir que le catalyseur selon l'invention constitué d'une zéolithe de structure mordénite à "petits pores" échangée avec 0,5 % en poids de palladium par rapport au poids total du catalyseur présente une bonne activité de réduction des NO_{X} à des températures relativement basses comprises entre 300 et 250°C. Le maximum de conversion obtenu est d'environ 53 % à 400°C et ce en présence de 10 % en volume par rapport au volume total gazeux, d'oxygène.

### Exemple 2 (Non conforme avec l'invention)

### Activité de réductio des NOₓ d'un catalyseur selon l'invention contenant 1,6 % en poids de Co

Un catalyseur constitué d'une zéolithe de structure mordénite à "petits pores", échangée avec 1,6 % en poids de cobalt par rapport au poids total du catalyseur, a été préparé comme décrit antérieurement à partir d'une mordénite sous forme ammonium.

Ce catalyseur a ensuite été testé dans les conditions suivantes :

| | |
|---|---|
| Conditions du test | NO : 200 ppm |
| | CH₄ : 300 ppm |
| | O2 : 10 % en volume par rapport au volume total gazeux |
| | VVH : 10000 h-1 |
| | VVH = vitesse spatiale horaire |

Les pourcentages de conversion des NO_{X} et de CH₄ en fonction de la température de la réaction de réduction sont reportés au Tableau 3 ci-après et illustrés sous forme de graphique dans la figure 2 annexée.

**Tableau 3**

| Température (°C) | Conversion (%) | |
|---|---|---|
| | CH₄ | NOₓ |
| 400 | 14,0 % | 24,7 % |
| 450 | 56,0 % | 61,5 % |
| 500 | 96,0 % | 64,1 % |

On peut voir à partir du Tableau 3 et de la figure 2 qu'un tel catalyseur constitué d'une zéolithe de structure mordénite à "petits pores" échangée avec 1,6 % en poids de Co par rapport au poids total du catalyseur, a une activité de conversion des NO_{X} bien supérieure à ceux de l'art antérieur à la même température de réduction, c'est-à-dire 450°C. Ainsi, le brevet US-A-5 149 512 rapportait un pourcentage de conversion des NOₓ de 27 % à 450°C avec une mordénite à "larges pores" alors qu'avec le catalyseur de l'invention on obtient un pourcentage de conversion des NO_{X} compris entre 60 et 65 % entre 400 et 450°C et ce en présence de 10 % d'oxygène.

On notera également que dans l'art antérieur, la zéolithe était échangée avec 5,5 % en poids de Co alors qu'avec le présent catalyseur, de meilleurs résultats de conversion de NOₓ sont obtenus en échangeant seulement 1,6 % en poids de Co dans la mordénite à "petits pores".

### Exemple 3

### Activité de réduction des NO_{X} d'un catalyseur selon l'invention contenant 1,6 % en poids de Co et 0,47 % en poids de Pd

Un catalyseur constitué d'une zéolithe de structure mordénite à "petits pores" échangée avec 1,6 % en poids de cobalt et 0,47 % en poids de palladium par rapport au poids total du catalyseur a été préparé dans les mêmes conditions que précédemment à partir d'une mordénite de forme ammonium.

Le catalyseur a été testé dans les conditions suivantes :

| | |
|---|---|
| Conditions du test | NO : 200 ppm |
| | CH₄ : 300 ppm |
| | O2 : 10 % en volume par rapport au volume total gazeux |
| | VVH : 10000 h-1 |
| | VVH = vitesse spatiale horaire |

Les résultats du test en termes de pourcentage de conversion des NO_{X} et de CH₄ sont reportés au Tableau 4 ci-après et illustrés sous forme graphique dans la figure 3 annexée.

**Tableau 4**

| Température (°C) | Conversion (%) | |
|---|---|---|
| | CH₄ | NOₓ |
| 300 | 8, 7 % | 8,3 % |
| 350 | 42 % | 36,9 % |
| 400 | 100 % | 70 % |

On peut voir à partir du Tableau 4 et de la figure 3 que le catalyseur bimétallique Pd/Co a une forte activité dans un large intervalle de températures. On acte également que le taux de transformation des NO_{X} est exalté à 400°C. En effet il est de l'ordre de 70 % avec une conversion totale du méthane et ce en présence de 10 % d'oxygène.

Afin de confirmer les avantages de l'utilisation, comme catalyseur selon l'invention, d'une zéolithe de structure mordénite à "petits pores" échangée avec du palladium ou un mélange de cobalt et de palladium, par rapport au même catalyseur qui est constitué d'une zéolithe à "larges pores" on a alors réalisé les essais comparatifs suivants :

### Exemple comparatif N° 2 :

### Comparaison d'un catalyseur constitué d'une zéolithe de structure mordénite à "petits pores" et d'un catalyseur constitué d'une zéolithe à "larges pores", échangées avec 0,5 % en poids de palladium :

Deux catalyseurs ont été préparés à partir, respectivement, d'une zéolithe de structure mordénite à "petits pores" de forme ammonium échangée avec 0,5 % en poids par rapport au poids total du catalyseur, de Pd et d'une zéolithe de structure mordénite de forme ammonium à "larges pores" échangée avec 0,5 % en poids par rapport au poids total du catalyseur, de Pd, dans les mêmes conditions que précédemment.

Ces catalyseurs ont été testés dans les conditions suivantes :

| | |
|---|---|
| Conditions des tests | NO : 200 ppm |
| | CH₄ : 300 ppm |
| | O₂ : 10 % en volume par rapport au volume total gazeux |
| | VVH : 10 000 h⁻¹ |
| | VVH = vitesse spatiale horaire. |

Les résultats des tests sont reportés au Tableau 5 ci-après :

**Tableau 5**

| Référence | Température °C | Conversion NOₓ % |
|---|---|---|
| Mordénite à "larges pores" (comparative) | 300 | 21 |
| | 350 | 38 |
| | 400 | 47 |
| Mordénite à "petits pores | 300 | 17 |
| | 350 | 41 |
| | 400 | 53 |

Comme on peut le voir à partir du Tableau 5, le catalyseur constitué d'une zéolithe de structure mordénite à "petits pores" présente une activité supérieure au catalyseur constitué d'une mordénite à "larges pores".

### Exemple comparatif N° 3:

Comparaison d'un catalyseur constitué d'une zéolithe de structure mordénite sous forme ammonium à "larges pores" échangée avec 0,57 % en poids de Pd et 2,56 % en poids de Co par rapport au poids total du catalyseur et d'un catalyseur constitué d'une zéolithe de structure mordénite à "petits pores" sous forme ammonium échangée avec 0,5 % en poids de Pd et 2,51 % en poids de Co par rapport au poids total du catalyseur.

Les conditions de préparation des catalyseurs étaient identiques à celles des Exemples précédents.

Ces catalyseurs ont été testés dans les mêmes conditions qu'à l'Exemple Comparatif N° 2.

Les résultats des tests sont reportés au Tableau 6 ci-après :

**Tableau 6**

| Référence | Température °C | Conversion NOₓ % |
|---|---|---|
| Mordénite à "larges pores" (comparative) | 300 | 7,8 |
| | 350 | 19,2 |
| | 400 | 39,9 |
| | 450 | 31,6 |
| Mordénite à "petits pores" | 300 | 13,5 |
| | 350 | 38,5 |
| | 400 | 55,2 |
| | 450 | 39,6 |

Les résultats du Tableau 6 confirment l'avantage du catalyseur bimétallique selon l'invention par rapport à un catalyseur constitué d'une zéolithe à "larges pores" de l'art antérieur.

Enfin, pour confirmer l'effet synergétique de Pd et de Co dans un catalyseur de l'invention, les trois essais complèmentaires suivants ont été effectués mettant en évidence que pour une teneur en Pd + Co identique à la teneur en Co, des résultats bien supérieurs sont obtenus avec Pd + Co.

### Exemple 4

Un catalyseur (non conforme avec l'invention) constitué d'une zéolithe de structure mordénite à "petits pores" sous forme ammonium échangée avec 1,9 % en poids de Co par rapport au poids total du catalyseur, un catalyseur selon l'invention constitué d'une zéolithe de structure mordénite à "petits pores" sous forme ammonium échangée avec 0,6 % en poids de Pd par rapport au poids total du catalyseur, et un catalyseur selon l'invention constitué d'une zéolithe de structure mordénite à "petits pores" sous forme ammonium échangée avec 1,2 % en poids de Co et 0,6 % en poids de Pd par rapport au poids total du catalyseur, ont été préparés dans les mêmes conditions que précédemment.

Ainsi le catalyseur bimétallique testé à une teneur en Co + Pd équivalente à la teneur en Co uniquement du catalyseur au Co testé dans cet exemple.

Les conditions des tests étaient les suivantes :

| | | |
|---|---|---|
| Conditions des tests | NO : | 200 ppm |
| | CH₄ : | 300 ppm |
| | O₂ : | 10 % en volume par rapport au volume gazeux total |
| | VVH : | 10 000 h⁻¹ |
| | VVH : | vitesse spatiale horaire |

Les résultats des tests sont reportés au Tableau 7 ci-après :

**Tableau 7**

| Référence | Température °C | Conversion CH₄ % | Conversion NOₓ % |
|---|---|---|---|
| Mordénite à "petits pores" échangée avec 1,9 % de Co (comparative) | 400 | 14 | 24,7 |
| | 450 | 56 | 61,5 |
| | 500 | 96 | 64,1 |
| Mordénite à "petits pores" échangée avec 0,6 % de Pd | 300 | 18,2 | 15,4 |
| | 350 | 52,7 | 41 |
| | 400 | 92,7 | 53 |
| Mordénite à "petits pores" échangée avec 1,2 % de Co et 0,6 % de Pd | 300 | 16 | 18 |
| | 350 | 48 | 42 |
| | 400 | 100 | 66 |
| | 450 | 100 | 47,5 |

Comme on le voit à partir du Tableau 7, avec le catalyseur bimétallique selon l'invention, un taux de conversion des NO_{X} de 66 % est obtenu à 400°C. Ce taux de conversion est supérieur à la fois à celui obtenu avec un catalyseur (non conforme avec l'invention) échangé uniquement avec du cobalt et à un catalyseur selon l'invention échangé uniquement avec du palladium.

### Exemple 5

Un catalyseur (non conforme avec l'invention) constitué d'une zéolithe de structure mordénite, sous forme ammonium à "petits pores", échangée avec 3,2 % en poids de cobalt par rapport au poids total du catalyseur et un catalyseur selon l'invention constitué d'une zéolithe de structure mordénite sous forme ammonium à "petits pores" échangée avec 2,8 % en poids de Co et 0,4 % en poids de palladium par rapport au poids total du catalyseur ont été synthétisés comme précédemment. Ces deux catalyseurs ont été testés dans les mêmes conditions que précédemment.

Les résultats sont reportés au Tableau 8 ci-après :

**Tableau 8**

| Référence | Température °C | Conversion CH₄ % | Conversion NOₓ % |
|---|---|---|---|
| Mordénite à "petits pores" échangée avec 3,2 % de Co (comparative) | 400 | 33,3 | 31,6 |
| | 450 | 86,0 | 49,2 |
| | 500 | 100 | 39,9 |
| Mordénite à "petits pores" échangée avec 2,8 % de Co et 0,4 % % de Pd | 300 | 18,7 | 15,4 |
| | 350 | 60 | 41,3 |
| | 400 | 100 | 58,2 |
| | 450 | 100 | 47,2 |

Les résultats reportés au Tableau 8 confirment l'effet synergétique obtenu avec le catalyseur bimétallique de l'invention échangé avec à la fois Co et Pd, en termes d'activité de conversion des NOₓ.

### Exemple 6

### Influence de l'oxygène sur l'activité du catalyseur bimétallique de l'invention

Un catalyseur selon l'invention constitué d'une zéolithe de structure mordénite à "petits pores", sous forme ammonium, échangée avec 0,59 % en poids de Pd et 1,18 % en poids de Co par rapport au poids total du catalyseur a été préparé comme précédemment.

Ce catalyseur a été testé avec un mélange réactionnel contenant des quantités croissances, allant jusqu'à 10 % en volume par rapport au volume total du mélange réactionnel d'oxygène.

Les conditions des tests étaient les suivantes :

| | |
|---|---|
| Conditions des tests | NO : 200 ppm |
| | CH₄ : 300 ppm |
| | O₂ : 0 à 10 % en volume par rapport au volume gazeux total |
| | T° : 400°C |
| | VVH: : 10 000 h⁻¹ |
| | VVH = vitesse spatiale horaire |

Les résultats de ces tests sont reportés au Tableau 9 ci-après :

**Tableau 9**

| 0₂ % | CONVERSION % | |
|---|---|---|
| | CH₄ % | NOₓ % |
| 0 | 58,7 | 100 |
| 1 | 72,7 | 59 |
| 2 | 74 | 57 |
| 4 | 87,3 | 56 |
| 6 | 94 | 55 |
| 8 | 96,7 | 55 |
| 10 | 100 | 55 |

On voit à partir du Tableau 9 qu'avec le catalyseur du type bimétallique selon l'invention, le taux de conversion des NO_{X} est total en l'absence d'oxygène. Ce résultat est surprenant par rapport à d'autres systèmes catalytiques de l'art antérieur qui ne permettent pas d'obtenir un tel résultat en l'absence d'oxygène.

On voit également qu'on obtient toujours d'excellents taux de conversion des NOx même en présence de 10 % d'oxygène. De plus, le taux de conversion des NOx en présence de 10 % d'oxygène est sensiblement équivalent au taux de conversion des NOx en présence de seulement 1 % d'oxygène.

### Exemple 7

### Influence de l'eau sur l'activité du catalyseur bimétallique de l'invention.

Un catalyseur selon l'invention constitué d'une zéolithe de structure mordénite à "petits pores", sous forme ammonium, échangée avec 0,50 % en poids de Pd et 2,56 % en poids de Co par rapport au poids total du catalyseur a été préparé comme précédemment. Ce catalyseur correspond sensiblement au catalyseur de l'Exemple 3. Ce catalyseur a été testé avec un mélange réactionnel contenant entre 0 % et 10 % d'eau.

Les conditions des tests étaient les suivantes :

| | | |
|---|---|---|
| Conditions des tests | No | 200 ppm |
| | CH₄ | 300 ppm |
| | 0₂ | 10 % en volume par rapport au volume gazeux total |
| | H₂O | 0 %, 3 % et 10 % en volume par rapport au volume gazeux total |
| | VVH | 10 000 h⁻¹ |
| | VVH | vitesse spatiale horaire. |

Les résultats des tests sont reportés au tableau 10 ci-après :

**Tableau 10**

| Température de conversion en °C | % conversion des NOx | | |
|---|---|---|---|
| | 0 % H₂O | 3 % H₂O | 10 % H₂O |
| 350 | 38,5 | 28,6 | 26,2 |
| 400 | 55,2 | 53,3 | 41,4 |
| 450 | 39,6 | 39,5 | 39,5 |

Les catalyseurs sont en général très sensibles à la présence d'eau.

Cependant les résultats reportés au Tableau 10 montrent que le catalyseur de l'invention ne perd que peu d'activité en présence de jusqu'à 10 % en volume d'eau à des températures de conversion de 350° et 400°C et, qu'en revanche, il ne perd aucune activité à 450°C.

### Exemple 8

### Influence de la présence des composés soufrés sur l'activité du catalyseur bimétallique de l'invention

Les catalyseurs sont connus pour avoir une très forte sensibilité aux "poisons soufrés".

Le catalyseur de l'Exemple 6 a alors été testé en présence de 3 % en volume, par rapport au volume gazeux total, d'eau et de 0, 50 ppm et 500 ppm de SO₂, respectivement.

Les conditions des tests étaient les suivantes :

| | | |
|---|---|---|
| Conditions de tests | NO | 200 ppm |
| | CH₄ | 300 ppm |
| | O₂ | 10 % en volume par rapport au volume gazeux total |
| | H₂O | 3 % en volume par rapport au volume gazeux total |
| | SO₂ | 0,50 et 500 ppm |
| | VVH | 10 000 h⁻¹ |
| | VVH | vitesse spatiale horaire |

Les résultats des tests sont reportés au Tableau 11 ci-après :

**Tableau 11**

| Température de réaction en °C | % conversion des NOx | | |
|---|---|---|---|
| | 3 % H₂O + 0 ppm SO₂ | 3 % H₂O + 50 ppm SO₂ | 3 % H₂O + 500 ppm SO₂ |
| 350 | 28,6 | 32 | 19,2 |
| 400 | 53,3 | 56,5 | 36,8 |
| 450 | 39,5 | 41,2 | 37,5 |

On voit à partir des résultats du Tableau 11 que le catalyseur bimétallique de l'invention conserve son activité même en présence de 50 ppm de SO₂ quelle que soit la température de conversion. Mieux, à 450°C le catalyseur de l'invention conserve son activité même en présence de 500 ppm de SO₂.

A partir des résultats des Exemples 6 à 8, on voit que le catalyseur bimétallique selon l'invention est très peu sensible à l'eau et aux SO₂, y compris dans les conditions dans lesquelles un catalyseur selon l'invention ne contenant que du Co se désactivait.

Le catalyseur bimétallique selon l'invention présente donc de nombreux avantages et est un mode de réalisation particulièrement préféré de celle-ci.

### Exemple 9

### Influence de la concentration en NO sur l'activité du catalyseur bimétallique selon l'invention

Le même catalyseur que ceux des Exemples 6 et 8 a été testé en présence de jusqu'à 600 ppm de NO.

Les conditions des tests étaient les suivants :

| | | |
|---|---|---|
| Conditions des tests | CH₄/NO | 1,5 |
| | O₂ | 10 % en volume par rapport au volume gazeux total |
| | VVH | 10 000 h⁻¹ |
| | VVH | vitesse spatiale horaire |

Les résultats des tests sont reportés au Tableau 12 ci-après :

**Tableau 12**

| Température de conversion °C | % conversion des NOₓ | |
|---|---|---|
| | 200 ppm NO | 600 ppm NO |
| 350 | 38,5 | 50,3 |
| 400 | 55,2 | 78 |
| 450 | 39,6 | 71,7 |

On voit à partir des résultats du Tableau 12 que le catalyseur bimétallique selon l'invention a une activité de conversion des NO_{X} excellentes, également en présence des fortes concentrations en NO.

### Exemple 10

### Influence de la concentration en Co et Pd sur l'activité des catalyseurs selon l'invention

Enfin, afin de mieux mettre en évidence les excellentes propriétés des catalyseurs de l'invention, on a regroupé au Tableau 13 ci-après les résultats des tests menés sur ces catalyseurs.

Les conditions des tests étaient les suivantes :

| | | |
|---|---|---|
| Conditions de tests | NO | 200 ppm |
| | CH₄ | 300 ppm |
| | 0₂ | 10 % en volume par rapport au volume gazeux total |
| | VVH | 10 000 h⁻¹ |
| | VVH | vitesse spatiale horaire |

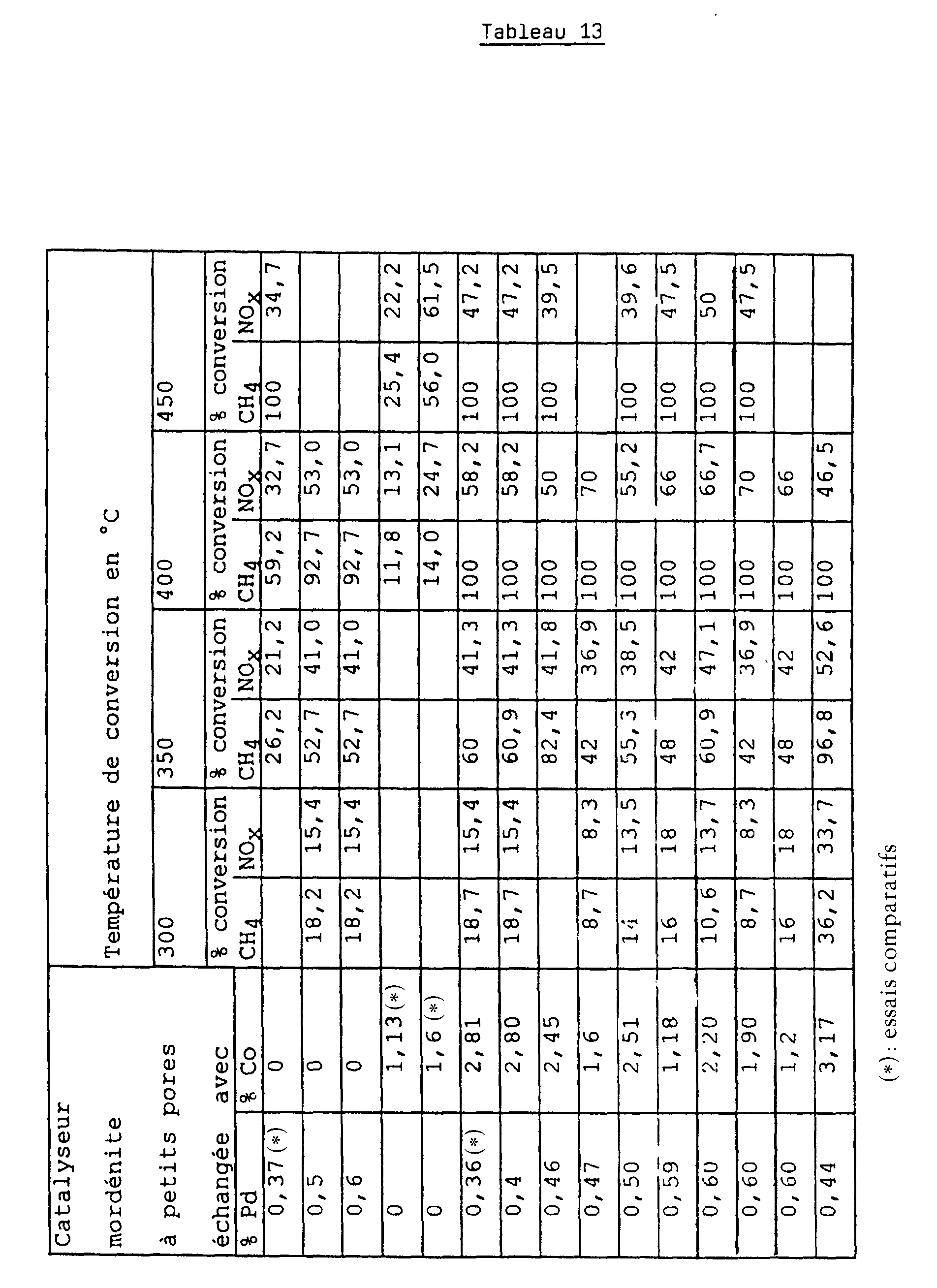

Bien entendu, l'invention n'est nullement limitée aux modes de réalisation décrits et illustrés qui n'ont été donnés qu'à titre d'exemples.

## Revendications

1. Catalyseur de réduction des NOₓ, par du méthane ou tout mélange contenant majoritairement du méthane, constitué d'une zéolithe de structure mordénite ayant un diamètre de pores inférieur à 5Å, ladite zéolithe étant échangée avec entre 0,4 % et 0,6 % en poids de Pd sous la forme de Pd²⁺, optionnellement, en combinaison avec entre 1,18 % et 3,2 % en poids de Co sous forme Co²⁺, par rapport au poids total du catalyseur.

2. Catalyseur selon la revendication 1 dans lequel la zéolithe est sous forme sodique ou sous forme ammonium avec un rapport molaire Si/Al égal à 5,5.

3. Catalyseur selon la revendication 1 ou 2 dans lequel la zéolithe est échangée avec du Pd seulement.

4. Catalyseur selon la revendication 1 ou 2 dans lequel la zéolithe est échangée avec du Pd et du Co.

5. Procédé de réduction des NOₓ par du méthane ou tout mélange contenant majoritairement du méthane caractérisé en ce qu'il comprend la mise en contact d'un milieu réactionnel comprenant des NOₓ, et du méthane avec le catalyseur selon l'une quelconque des revendications 1 à 4.

6. Procédé de réduction des NOₓ selon la revendication 5 caractérisé en ce que le milieu réactionnel contient de plus de l'oxygène.

7. Procédé selon la revendication 5 ou 6, caractérisé en ce que le milieu réactionnel contient de plus des composés soufrés.

8. Procédé selon l'une quelconque des revendications 5 à 7, caractérisé en ce que le mélange réactionnel contient de plus de l'eau.

## Claims

1. Catalyst for reducing NOₓ by methane or any mixture that mainly contains methane, formed from a zeolite of a mordenite structure having a pore diameter smaller than 5Å, said zeolite being exchanged with between 0.4 % and 0.6 % by weight of Pd in the shape of Pd²⁺, optionally, in combination with between 1.18 % and 3.2 % by weight of Co in the shape of Co²⁺, with respect to the total weight of the catalyst.

2. Catalyst according to claim 1 wherein the zeolite is in a sodic form or in an ammonium form with a molar ratio Si/Al equal to 5.5.

3. Catalyst according to claim 1 or 2 wherein the zeolite is exchanged with Pd only.

4. Catalyst according to claim 1 or 2 wherein the zeolite is exchanged with Pd and Co.

5. Method for reducing NOₓ by methane or any mixture that mainly contains methane, characterized in that it comprises contacting a reactive medium that comprises NOₓ and methane with the catalyst according to any of claims 1 to 4.

6. Method for reducing NOₓ according to claim 5 characterized in that the reactive medium further contains oxygen.

7. Method according to claim 5 or 6, characterized in that the reactive medium further contains sulphureous compounds.

8. Method according to any of claims 5 to 7, characterized in that the reactive medium further contains water.

## Patentansprüche

1. Katalysator zur NOx-Reduktion durch Methan oder jedes mehrheitlich Methan enthaltende Gemisch, gebildet durch einen Zeolith mit Mordenitstruktur mit einem Porendurchmesser von unter 5Å, wobei besagter Zeolith mit zwischen 0,4 Gewichtsprozent und 0,6 Gewichtsprozent Pd in Form von Pd²⁺, optional in Verbindung mit zwischen 1,18 Gewichtsprozent und 3,2 Gewichtsprozent Co in Form von Co²⁺ im Verhältnis zum Gesamtgewicht des Katalysators ausgetauscht wird.

2. Katalysator gemäß Anspruch 1, in dem der Zeolith in natriumhaltiger Form oder in Form von Ammonium mit einem Mol-Verhältnis Si / Al gleich 5,5 ist.

3. Katalysator gemäß Anspruch 1 oder 2, in dem der Zeolith nur mit Pd ausgetauscht wird.

4. Katalysator gemäß Anspruch 1 oder 2, in dem der Zeolith mit Pd und Co ausgetauscht wird.

5. Verfahren zur NOx-Reduktion durch Methan oder jedes andere, mehrheitlich Methan enthaltende Gemisch, dadurch gekennzeichnet, daß es die In-Kontakt-Bringung eines NOxe umfassenden Reaktionsmilieus mit Methan mit dem Katalysator gemäß Anspruch 1 bis 4 umfaßt.

6. Verfahren zur NOx-Reduktion gemäß Anspruch 5, dadurch gekennzeichnet, daß das Reaktionsmilieu außerdem Sauerstoff enthält.

7. Verfahren gemäß Anspruch 5 oder 6, dadurch gekennzeichnet, daß das Reaktionsmilieu außerdem schwefelhaltige Verbindungen enthält.

8. Verfahren gemäß Anspruch 5 bis 7, dadurch gekennzeichnet, daß das Reaktionsgemisch außerdem Wasser enthält.
